# EUROPEAN PATENT SPECIFICATION

(11) **EP 4 547 463 B1**
(45) Date of publication and mention of the grant of the patent: **25.02.2026**
(21) Application number: 23732967.7
(22) Date of filing: 16.06.2023
(51) Int. Cl.: B29C 33/44, B27N 3/04, B27N 3/18, B27N 5/02, B29C 33/42, B29C 37/00, B29C 43/00, B29C 43/04, B31B 50/88, B27N 3/02, B27N 3/14, B27N 5/00, B29C 43/02, B29C 43/50

(54) **FORMING MOULD COMPRISING A MOVABLE ELEMENT AND METHOD FOR FORMING CELLULOSE PRODUCTS**
FORM MIT EINEM BEWEGLICHEN ELEMENT UND VERFAHREN ZUR FORMUNG VON CELLULOSEPRODUKTEN
MOULE DE FORMAGE COMPRENANT UN ÉLÉMENT MOBILE ET PROCÉDÉ DE FORMAGE DE PRODUITS DE CELLULOSE

(30) Priority: 01.07.2022 SE 2250829
(43) Date of publication of application: 07.05.2025
(73) Proprietor: PulPac AB, 421 31 Västra Frölunda (SE)
(72) Inventor: EKSTRAND, Niklas, 443 50 Lerum (SE); ARLEROT, Björn, 413 20 Göteborg (SE); BERGFJORD, Mathias, 416 48 Göteborg (SE); SJÖSTRAND JONSSON, Felix, 414 66 Göteborg (SE); LJUNGBERG, Martin, 416 55 Göteborg (SE); HÖGBLOM, Olle, 412 59 Göteborg (SE)
(74) Representative: Zacco Sweden AB
(86) International application number: PCT/EP2023/066250
(87) International publication number: WO 2024/002723

(56) References cited:
- JP-A- H0 261 170
- JP-A- S60 193 347
- KR-U- 20180 001 271
- US-A- 4 802 948

## Description

### TECHNICAL FIELD

The present invention relates to a forming mould for forming three-dimensional cellulose products from an air-formed cellulose blank structure where the forming mould comprises a movable element. The invention further relates to a method for forming three-dimensional cellulose products from an air-formed cellulose blank structure in a forming mould where the forming mould comprises a movable element.

### BACKGROUND

Cellulose fibres are commonly used as raw material for producing or manufacturing products. Products formed of cellulose fibres can be used in many different situations where there is a need for sustainable products. A wide range of products can be produced from cellulose fibres and a few examples are disposable plates and cups, cutlery, lids, bottle caps, coffee pods, blank structures, hangers, and packaging materials.

Forming mould systems are commonly used when manufacturing cellulose products from raw materials including cellulose fibres, and traditionally the cellulose products have been produced by wet-forming methods. A material commonly used for wet-forming cellulose fibre products is wet moulded pulp. Wet-formed products are generally formed by immersing a suction forming mould into a liquid or semi liquid pulp suspension or slurry comprising cellulose fibres, and when suction is applied, a body of pulp is formed with the shape of the desired product by fibre deposition onto the forming mould. With all wet-forming methods, there is a need for drying of the wet moulded product, where the drying process is a time and energy consuming part of the production. The demands on aesthetical, chemical and mechanical properties of cellulose products are increasing, and due to the properties of wet-formed cellulose products, the mechanical strength, flexibility, freedom in material thickness, and chemical properties are limited. It is also difficult in wet-forming processes to control the mechanical properties of the products with high precision.

One development in the field of producing cellulose products is dry-forming of cellulose products without using wet-forming methods. Instead of forming the cellulose products from a liquid or semi liquid pulp suspension or slurry, an air-formed cellulose blank structure is used. The air-formed cellulose blank structure is inserted into a forming mould and during the dry-forming of the cellulose products, the cellulose blank is subjected to a high forming pressure and a high forming temperature. One difficulty with dry-forming methods is the problem with inserting the cellulose blank structure into the forming mould and removing the formed cellulose product from the forming mould in an efficient way. Especially when forming deep drawn cellulose products, the cellulose blank structure may be difficult to insert into the forming mould in an efficient way due to complex product shapes. Further, the formed cellulose products are easily stuck onto mould parts of the forming mould after the forming process. There is thus a need for forming moulds that are efficient in construction for easy insertion of the cellulose blank structure and removal of the formed cellulose products.

US4802948A discloses manufacturing of an interior trim component for a motor vehicle comprising a fibrous base material of 80% wood fibers and 20% synthetic resin fibers, which is compressed and consolidated by the action of pressure and heat into the desired shape.

### SUMMARY

An object of the present disclosure is to provide a forming mould, and a method for forming three-dimensional cellulose products, where the previously mentioned problems are avoided. This object is at least partly achieved by the features of the independent claims. The dependent claims contain further developments of the forming mould and method.

The disclosure concerns a forming mould for forming three-dimensional cellulose products from an air-formed cellulose blank structure. The forming mould comprises a first mould part and a second mould part. The first mould part and the second mould part are movable relative to each other in a pressing direction and arranged to be pressed relative to each other during forming of the cellulose products. The first mould part comprises a movable element displaceable between an extended state and a retracted state, where the movable element in the extended state is arranged as a protruding body extending in the pressing direction relative to a surrounding pressing surface of the first mould part. The movable element is in the extended state configured for inserting the cellulose blank structure into the second mould part and ejecting the cellulose products from the forming mould. The movable element is in the retracted state arranged as a pressing surface cooperating with the surrounding pressing surface for forming the cellulose products.

Advantages with these features are that the cellulose blank structure is efficiently inserted into the second mould part with the movable element, and that the formed cellulose products are efficiently removed from the forming mould with the movable element. The movable element is efficiently pushing the cellulose blank structure into the second mould part, which especially is important when forming deep drawn products. The movable element is further preventing the formed cellulose products from being stuck onto the first mould part after the forming process. The dual functionality of the movable element is providing a simple and efficient design of the forming mould. The movable element is further providing a fast and efficient removal operation of the formed cellulose products compared with traditional solutions, and the forming mould can still be made simple in construction.

A further advantage is that the movable element efficiently pushes the cellulose product out from the forming mould also when the forming mould is configured to give the cellulose product a shape and form with negative draft angles or undercut sections hindering free passage of the cellulose product upon removal from the forming mould. The movable element efficiently pushes the cellulose product out from the forming mould when moving from the retracted state to the extended state. This is especially advantageous when the first and second mould parts are rigid structures that do not change shape during the product forming operation.

According to an aspect, the movable element is arranged as a displaceable structural part of the first mould part. The displacement of the movable element is used for an efficient forming and removal process.

According to an aspect, in the extended state the movable element has a protruding configuration with an extension in the pressing direction. The protruding configuration is enabling a pushing action onto the cellulose blank structure for inserting the cellulose blank structure into the forming mould. The protruding configuration is further enabling easy and efficient removal of the formed cellulose products from the forming mould after the forming operation through the displacement of the movable element from the retracted state to the extended state, where the formed cellulose product is pushed in a direction away from the first mould part.

According to an aspect, the movable element is arranged in a cavity in the first mould part. The arrangement of the movable element in a cavity in the first mould part is securing that the movable element is not negatively impacting the forming of the cellulose products. The movable element is during the forming operation arranged within the cavity without exerting too high pressure onto the cellulose blank structure.

According to an aspect, in the retracted state the pressing surface is arranged flush with the surrounding pressing surface. The flush arrangement of the pressing surface with the surrounding pressing surface is enabling an efficient product forming operation in the forming mould with a smooth forming surface.

According to an aspect, the first mould part further comprises an actuator connected to the movable element. The actuator is configured for displacing the movable element. The use of an actuator is simplifying the displacement of the movable element.

According to an aspect, the actuator is arranged as a spring configured for displacing the movable element from the retracted state to the extended state.

According to an aspect, the actuator is arranged as an electric actuator, a hydraulic actuator, or a pneumatic actuator, configured for displacing the movable element between the extended state and the retracted state.

According to an aspect, the movable element comprises an embossing pattern and/or the second mould part comprises a mould embossing pattern. The embossing pattern and/or mould embossing pattern are configured for forming a structural pattern in the cellulose products upon forming in the forming mould. The embossing pattern and/or mould embossing pattern is efficiently providing the cellulose products with graphical elements during the forming process, and the graphical elements may for example be used for information or marking purposes, or for making the formed products attractive.

According to an aspect, the embossing pattern and/or the mould embossing pattern is configured as a logotype, a barcode, a QR code, or other identification code.

The disclosure further concerns a method for forming three-dimensional cellulose products from an air-formed cellulose blank structure in a forming mould. The forming mould comprises a first mould part and a second mould part. The first mould part and the second mould part are movable relative to each other in a pressing direction and arranged to be pressed relative to each other during forming of the cellulose products. The first mould part comprises a movable element displaceable between an extended state and a retracted state. In the extended state, the movable element is arranged as a protruding body extending in the pressing direction relative to a surrounding pressing surface of the first mould part. In the retracted state, the movable element is arranged as a pressing surface cooperating with the surrounding pressing surface. The method comprises the steps: providing the cellulose blank structure and arranging the cellulose blank structure between the first mould part and the second mould part; arranging the movable element in the extended state and inserting the cellulose blank structure into the second mould part with the movable element upon movement of the first mould part and/or the second mould part; arranging the movable element in the retracted state and forming the cellulose product from the cellulose blank structure by applying a forming temperature onto the cellulose blank structure, and applying a forming pressure onto the cellulose blank structure between the first mould part and the second mould part; displacing the movable element from the retracted state to the extended state, wherein the formed cellulose products are ejected from the forming mould upon movement of the movable element from the retracted state to the extended state.

The method is providing a way for efficiently inserting the cellulose blank structure into the forming mould with the movable element, and efficiently removing the formed cellulose products from the forming mould with the movable element. The movable element is efficiently pushing the cellulose blank structure into the second mould part, which especially is important when forming deep drawn products. The movable element is preventing the formed cellulose products from being stuck onto the first mould part. The displacement of the movable element from the retracted state to the extended state is enabling the movable element to push the formed cellulose product in a direction away from the first mould part for an easy removal of the cellulose products from the forming mould. The cellulose products are suitably formed as three-dimensional product structures formed from a compressed air-formed cellulose blank structure comprising loose and separated cellulose fibres. With loose and separated cellulose fibres is meant cellulose fibres that are separated from each other and loosely arranged relative to each other within the cellulose blank structure, or cellulose fibres or cellulose fibre bundles that are separated from each other and loosely arranged relative to each other within the cellulose blank structure.

According to an aspect, the method further comprises the step: arranging the movable element in the extended state in a protruding configuration with an extension in the pressing direction. The protruding configuration is enabling a pushing action onto the cellulose blank structure for inserting the cellulose blank structure into the forming mould. The protruding configuration is further enabling easy and efficient removal of the formed cellulose products from the forming mould after the forming operation through the displacement of the movable element from the retracted state to the extended state, where the formed cellulose product is pushed in a direction away from the first mould part.

According to an aspect, the method further comprises the step: arranging the pressing surface in the retracted state flush with the surrounding pressing surface. The flush arrangement of the pressing surface with the surrounding pressing surface is enabling an efficient product forming operation in the forming mould with a smooth forming surface.

According to an aspect, the first mould part further comprises an actuator connected to the movable element. The method further comprises the step: displacing the movable element with the actuator. The actuator is used for an efficient displacement of the movable element.

According to an aspect, the actuator is arranged as a spring, displacing the movable element from the retracted state to the extended state.

According to an aspect, the actuator is arranged as an electric actuator, a hydraulic actuator, or a pneumatic actuator, displacing the movable element between the extended state and the retracted state.

According to an aspect, the movable element comprises an embossing pattern and/or the second mould part comprises a mould embossing pattern. The method further comprises the step: forming a structural pattern in the cellulose products with the embossing pattern and/or the mould embossing pattern upon forming in the forming mould. The embossing pattern and/or mould embossing pattern is efficiently providing the cellulose products with graphical elements during the forming process, and the graphical elements may for example be used for information or marking purposes, or for making the formed cellulose products attractive.

According to an aspect, the embossing pattern and/or the mould embossing pattern is configured as a logotype, a barcode, a QR code, or other identification code.

The movable element can be configured as one structural unit, or the movable element can be configured as two or more parts that are movable in relation to each other.

### BRIEF DESCRIPTION OF DRAWINGS

The disclosure will be described in detail in the following, with reference to the attached drawings, in which
- Fig. 1a-c: show schematically, in side views, a pressing module with a forming mould comprising a movable element according to an embodiment,
- Fig. 2a-g: show schematically, in side views, a forming mould with a movable element and a first mould part with the movable element according to an embodiment,
- Fig. 3a-b: show schematically, in a side view and in a view from below, a first mould part of the forming mould with a movable element comprising an embossing pattern,
- Fig. 4a-b: show schematically in a side view and in a view from above, a cellulose product with a formed structural pattern,
- Fig. 5a-b: show schematically, in a side view and in a view from above, a second mould part of the forming mould comprising a mould embossing pattern, and
- Fig. 6a-b: show schematically in a side view and in a view from below, a cellulose product with a formed structural pattern.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

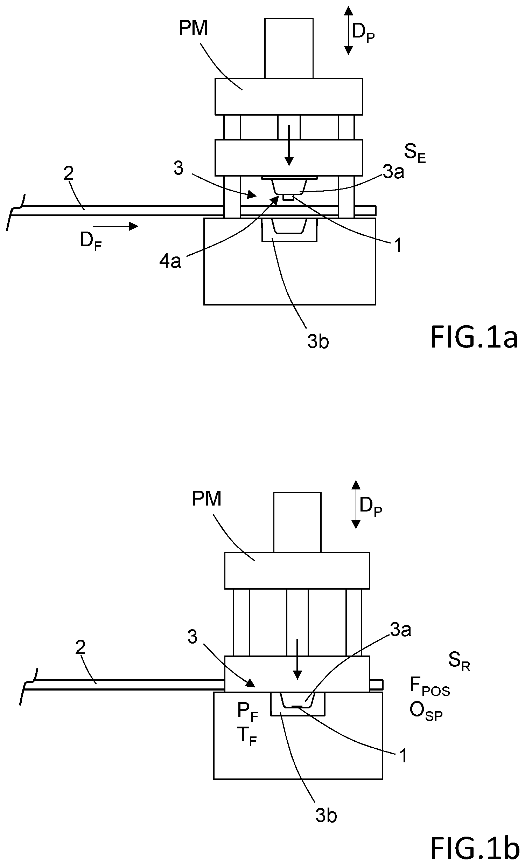

Figures 1a-c schematically show a pressing module PM for dry-forming cellulose products P from an air-formed cellulose blank structure 2. The pressing module PM comprises a forming mould 3. The forming mould 3 is arranged with a first mould part 3a and a second mould part 3b configured for interacting with each other for forming the cellulose products P from the air-formed cellulose blank structure 2 in the forming mould 3. The first mould part 3a and/or the second mould part 3b are movably arranged relative to each other in a pressing direction D_{P}, and arranged to be pressed relative to each other during forming of the cellulose products P. In the illustrated embodiment, the first mould part 3a comprises a movable element 1.

The movable element 1 is arranged for inserting the cellulose blank structure 2 into the second mould part 3b before forming of the cellulose products P, and ejecting the cellulose products P from the forming mould 3 after forming of the cellulose products P in the forming mould 3, as will be further described below. The movable element 1 may be made of any suitable material, such as for example steel, aluminium, composite materials or polymeric materials.

The cellulose products P are dry-formed from the air-formed cellulose blank structure 2 in the pressing module PM. With an air-formed cellulose blank structure 2 is meant an essentially air-formed fibrous web structure produced from cellulose fibres, where the cellulose fibres are carried and formed to the cellulose blank structure 2 by air as carrying medium. The cellulose blank structure 2 comprises loose and separated cellulose fibres that are compressed upon forming of the cellulose products P. With loose and separated cellulose fibres is meant cellulose fibres that are separated from each other and loosely arranged relative to each other within the cellulose blank structure 2, or cellulose fibres or cellulose fibre bundles that are separated from each other and loosely arranged relative to each other within the cellulose blank structure 2. The cellulose fibres may originate from a suitable cellulose raw material, such as a pulp material. Suitable pulp materials are for example fluff pulp, paper structures, or other cellulose fibre containing structures. The cellulose fibres may also be extracted from agricultural waste materials, for example wheat straws, fruit and vegetable peels, bagasse, or from other suitable sources. When for example using pulp as raw material for the cellulose blank structure 2, the pulp structure commonly needs to be separated in a separating unit, such as a suitable mill unit, before the air-forming of the cellulose blank structure 2. In the separating unit, the pulp structure is separated into individual cellulose fibres, or into individual cellulose fibres and cellulose fibre bundles, and the better milling process the more individual cellulose fibres are formed. In other embodiments, only individual cellulose fibres may be used as raw material for the cellulose blank structure 2. With air-forming of the cellulose blank structure 2 is meant the formation of a cellulose blank structure in a dry and controlled fibre forming process in which the cellulose fibres are air-formed to produce the cellulose blank structure 2. When forming the cellulose blank structure 2 in the air-forming process, the cellulose fibres are carried and formed to the cellulose blank structure 2 by air as carrying medium. It should be understood that even if the cellulose blank structure 2 is slightly compacted before the forming of the cellulose products P, such as compacting the cellulose blank structure 2 for feeding or transportation purposes, the cellulose blank structure 2 still comprises loose and separated cellulose fibres.

The air-forming process for forming the cellulose blank structure 2 is different from a normal papermaking process or a traditional wet-forming process, where water is used as carrying medium for the cellulose fibres when forming the paper or fibre structure. In the air-forming process, small amounts of water or other substances may if desired be added to the cellulose fibres in order to change the properties of the cellulose products, but air is still used as carrying medium in the forming process. The cellulose blank structure 2 may, if suitable have a dryness that is mainly corresponding to the ambient humidity in the atmosphere surrounding the air-formed cellulose blank structure 2. As an alternative, the dryness of the cellulose blank structure 2 can be controlled in order to have a suitable dryness level when forming the cellulose products P.

The air-formed cellulose blank structure 2 may be formed of cellulose fibres in a conventional air-forming process or in a cellulose blank air-forming module. The cellulose blank structure 2 may have a composition where the fibres are of the same origin or alternatively contain a mix of two or more types of cellulose fibres, depending on the desired properties of the cellulose products P. The cellulose fibres used in the cellulose blank structure 2 are during the forming process of the cellulose products P strongly bonded to each other with hydrogen bonds, due to applied forming pressure and forming temperature together with adequate moist content in the cellulose blank structure 2. The cellulose fibres may be mixed with other substances or compounds to a certain amount as will be further described below. With cellulose fibres is meant any type of cellulose fibres, such as natural cellulose fibres or manufactured cellulose fibres. The cellulose blank structure 2 comprises at least 95% cellulose fibres, or more specifically at least 99% cellulose fibres.

The air-formed cellulose blank structure 2 may have a single-layer or a multi-layer configuration. A cellulose blank structure 2 having a single-layer configuration is referring to a structure that is formed of one layer containing cellulose fibres. A cellulose blank structure 2 having a multi-layer configuration is referring to a structure that is formed of two or more layers comprising cellulose fibres, where the layers may have the same or different compositions or configurations.

The cellulose blank structure 2 may comprise one or more additional cellulose layers comprising cellulose fibres, where an additional cellulose layer for example is arranged as a carrying layer for one or more other layers of the cellulose blank structure 2. The one or more additional cellulose layers may act as reinforcement layers having a higher tensile strength than other layers of the cellulose blank structure 2. This is useful when one or more air-formed layers of the cellulose blank structure 2 have compositions with low tensile strength in order to avoid that the cellulose blank structure 2 will break during the forming of the cellulose products P. The one or more additional cellulose layers with higher tensile strength act in this way as a supporting structure for other layers of the cellulose blank structure 2. The one or more additional cellulose layers may be of a different composition than the rest of the cellulose blank structure 2, such as for example a tissue layer containing cellulose fibres, an airlaid structure comprising cellulose fibres, or other suitable layer structures. It is thus not necessary that the one or more additional cellulose layers are air-formed. Other suitable additional layers may also be used such as for example silicone coated structures or bio-based films.

The one or more air-formed layers of the cellulose blank structure 2 are fluffy and airy structures, where the cellulose fibres forming the structures are arranged relatively loosely relative to each other. The fluffy cellulose blank structures 2 are used for an efficient dry-forming of the cellulose products P, allowing the cellulose fibres to form the cellulose products P in an efficient way during the dry-forming process in the pressing module PM.

Figures 1a-c schematically show an example embodiment of the pressing module PM for dry-forming cellulose products P from the cellulose blank structure 2. To form the cellulose products P from the air-formed cellulose blank structure 2 in the pressing module PM, the cellulose blank structure 2 is first provided from a suitable source. The cellulose blank structure 2 may be air-formed from cellulose fibres and arranged on rolls or in stacks. The rolls or stacks may thereafter be arranged in connection to the pressing module PM. As an alternative, the cellulose blank structure 2 may be air-formed from cellulose fibres in a non-illustrated cellulose blank air-forming module arranged in connection to the pressing module PM, and directly fed to the pressing module PM after the air-forming operation. The cellulose blank structure 2 is fed to the pressing module PM with suitable non-illustrated transportation means, such as forming wires, vacuum belt feeders, or conveyor belts.

The pressing module PM comprises one or more forming moulds 3, and the one or more forming moulds 3 are configured for dry-forming the cellulose products P from the cellulose blank structure 2. The pressing module PM may be arranged with only one forming mould 3 in a single-cavity configuration, or alternatively with two or more forming moulds in a multi-cavity configuration. A single-cavity configuration pressing module thus comprises only one forming mould 3 with a first mould part 3a and a cooperating second mould part 3b. A multi-cavity configuration pressing module comprises two or more forming moulds 3, each having cooperating first mould part 3a and second mould part 3b.

In the embodiment illustrated in figures 1a-c, the pressing module PM is arranged as a single-cavity configuration pressing module comprising one forming mould 3 with a first mould part 3a and a second mould part 3b movably arranged relative to each other. In the following, the pressing module PM will be described in connection to a single-cavity configuration pressing module, but the disclosure is equally applicable on a multi-cavity configuration pressing module.

The pressing module PM can for example be constructed so that the first mould part 3a or the second mould part 3b is movable and arranged to move towards the other mould part during the dry-forming process, where the other mould part is stationary or non-movably arranged. In the embodiment illustrated in figures 1a-c, the first mould part 3a is movably arranged and the second mould part 3b is stationary. In an alternative non-illustrated embodiment, both the first mould part 3a and the second mould part 3b are movably arranged, where the first mould part 3a and the second mould part 3b are displaced in directions towards each other during the dry-forming process. The moving mould parts may be displaced with a suitable actuator, such as a hydraulic, pneumatic, or electric actuator. A combination of different actuators may also be used. The relative speed between the first mould part 3a and the second mould part 3b during the dry-forming process is suitably chosen so that the cellulose blank structure 2 is evenly distributed in the forming mould 3 during the dry-forming process.

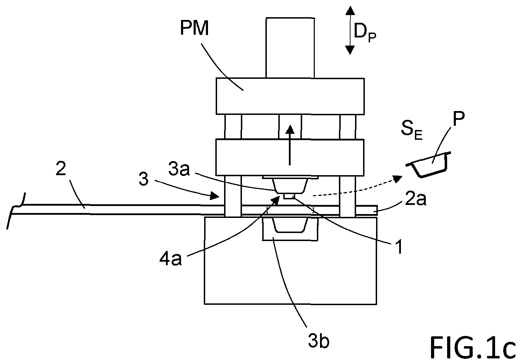

As indicated in figures 1a-c, the first mould part 3a is movably arranged relative to the second mould part 3b in the pressing direction D_{P} and the first mould part 3a is further arranged to be pressed towards the second mould part 3b in the pressing direction D_{P} during dry-forming of the cellulose products P for establishing a forming pressure P_{F} onto the cellulose blank structure 2. When dry-forming the cellulose products P, the cellulose blank structure 2 is arranged between the first mould part 3a and the second mould part 3b when the forming mould 3 is in an open state, as shown in figure 1a. When the cellulose blank structure 2 has been arranged in the forming mould 3, the first mould part 3a is moved towards the second mould part 3b during the dry-forming process. When the forming pressure P_{F} together with a suitable forming temperature T_{F} are established in the forming mould 3 onto the cellulose blank structure 2, the movement of the first mould part 3a is stopped in a product forming position F_{POS}, as shown in figure 1b. As shown in figure 1c, the first mould part 3a is thereafter moved in a direction away from the second mould part 3b after a certain time duration or directly after the first mould part 3a has been stopped. A suitable control system may be used for controlling the operation of the pressing module PM and the forming mould 3.

The cellulose products P are dry-formed from the cellulose blank structure 2 in the forming mould 3 by applying the forming pressure P_{F} and the forming temperature T_{F} onto the air-formed cellulose blank structure 2. The cellulose blank structure 2 is heated to a forming temperature T_{F} in the range of 100-300 °C, preferably in the range of 100-200 °C, and pressed with a forming pressure P_{F} in the range of 1-100 MPa, preferably in the range of 4-20 MPa. The first mould part 3a is arranged for forming the cellulose products P through interaction with the corresponding second mould part 3b. During dry-forming of the cellulose products P, the air-formed cellulose blank structure 2 is arranged in the forming mould 3, between the first mould part 3a and the second mould part 3b, and exerted to the forming pressure P_{F} in the range of 1-100 MPa, preferably in the range of 4-20 MPa, and the forming temperature T_{F} in the range of 100-300°C, preferably in the range of 100-200 °C. When dry-forming the cellulose products P, hydrogen bonds are formed between the cellulose fibres in the cellulose blank structure 2 arranged between the first mould part 3a and the second mould part 3b, due to the applied forming pressure P_{F} and forming temperature T_{F} together with adequate moist content in the cellulose blank structure 2.

The temperature and pressure levels are for example measured in the cellulose blank structure 2 during the dry-forming process with suitable sensors arranged in or in connection to the cellulose fibres in the cellulose blank structure 2. The cellulose blank structure 2 is typically containing less than 45 weight percent water when formed in the forming mould 3.

A cellulose product forming cycle is schematically illustrated in figures 1a-c. The cellulose blank structure 2 is, as indicated in figure 1a, transported to the forming mould 3 in a feeding direction D_{F} with a suitable transportation speed. The cellulose blank structure 2 is suitably fed intermittently to the forming mould 3. In order to form the cellulose products P, the cellulose blank structure 2 is arranged between the first mould part 3a and the second mould part 3b, as shown in figure 1a. Upon forming of the cellulose products P, the first mould part 3a is moved towards the second mould part 3b, and in the illustrated embodiment, the cellulose blank structure 2 is inserted by the movable element 1 into the second mould part 3b by a pushing action. When the first mould part 3a is moved towards the second mould part 3b with the cellulose blank structure 2 positioned between the mould parts, the forming pressure P_{F} is established onto the cellulose blank structure 2 by the force applied by the first mould part 3a. The interaction between the first mould part 3a and the second mould part 3b is in the forming position F_{POS} thus establishing the forming pressure P_{F} in the forming mould 3. The applied force is during the forming process establishing the forming pressure P_{F} onto the cellulose blank structure 2, as shown in figure 1b, which together with the forming temperature T_{F} applied onto the cellulose blank structure 2 are dry-forming the cellulose products P.

Suitably, the forming pressure P_{F} is applied onto the air-formed cellulose blank structure 2 during a single pressing operation O_{SP} upon forming of the cellulose products P in the forming mould 3. With a single pressing operation O_{SP} is meant that the cellulose product P is formed from the cellulose blank structure 2 in one single pressing step in the forming mould 3. In the single pressing operation O_{SP}, the first mould part 3a and the second mould part 3b are interacting with each other for establishing the forming pressure P_{F} and the forming temperature T_{F} during a single operational engagement step. Thus, in the single pressing operation O_{SP}, the forming pressure P_{F} and the forming temperature T_{F} are not applied to the cellulose blank structure 2 in two or more repeated pressing steps.

When the cellulose products have been dry-formed in the forming mould 3, the first mould part 3a is moved away from the second mould part 3b, as shown in figure 1c, and the formed cellulose product P can be removed from the forming mould 3 with the movable element 1, as will be further described below. After removal of the cellulose product P, the cellulose product forming cycle is repeated.

As described above, the forming mould 3 comprises a first mould part 3a and a second mould part 3b, where the first mould part 3a and the second mould part 3b are movable relative to each other in the pressing direction D_{P} and arranged to be pressed in relation to each other during forming of the cellulose products P. For all embodiments, the first mould part 3a comprises at least one movable element 1. The movable element 1 is displaceable between the extended state S_{E} and the retracted state S_{R}. The movable element 1 is in the extended state S_{E} arranged as a protruding body extending in the pressing direction D_{P} relative to a surrounding pressing surface 4a of the first mould part 3a. In the extended state S_{E}; the movable element 1 is configured for inserting the cellulose blank structure 2 into the second mould part 3b before forming the cellulose products, and ejecting the cellulose products P from the forming mould 3 after forming of the cellulose products P. In the retracted state S_{R}, the pressing surface 4b of the movable element 1 is cooperating with the surrounding pressing surface 4a for forming the cellulose products P.

In the embodiment illustrated in figures 1a-c, the forming mould 3 comprises one movable element 1 that is movably attached to the first mould part 3a, and the movable element 1 is arranged as a resilient protruding body extending in the pressing direction D_{P} of the forming mould 3 relative to a surrounding pressing surface 4a of the first mould part 3a in the extended state S_{E}, as shown in figures 1a and 1c. In this embodiment, the movable element 1 is centrally arranged in the first mould part 3a, and with this configuration the movable element 1 is in the extended state S_{E} arranged for efficiently inserting the cellulose blank structure 2 into the second mould part 3b and ejecting the cellulose products P from the forming mould 3 after forming of the cellulose products P in the forming mould 3.

When dry-forming the cellulose products P the forming mould is initially arranged in the position illustrated in figure 1a, where the movable element 1 is arranged in the extended state S_{E}. When moving the first mould part 3a in a direction towards the second mould part 3b, as indicated with the arrow in figure 1a, the movable element is in the extended state S_{E} pushing the cellulose blank structure 2 into the second mould part 3b. When arranging the forming mould 3 in the forming position F_{POS} through further movement of the first mould part 3a in a direction towards the second mould part 3b, the movable element 1 is displaced from the extended state S_{E} shown in figure 1a to the retracted state S_{R} shown in figure 1b. During the forming of the cellulose products P in the forming position, the movable element 1 is maintained in the retracted state S_{R}. After dry-forming the cellulose products P in the forming position F_{POS}, the first mould part 3a is moved in a direction away from the second mould part 3b, as indicated with the arrow in figure 1c, and during this movement the movable element 1 is displaced from the retracted state S_{C} back to the extended S_{E}. Through the displacement of the movable element 1 from the retracted state S_{R} back to the extended state S_{E}, the movable element 1 is separating the formed cellulose products P from the first mould part 3a. The displacement of the movable element 1 from the from the retracted state S_{R} back to the extended state S_{E} is enabling a downwards pushing action by the movable element 1 onto the formed cellulose product P in a direction away from the first mould part 3a. Thereafter, the cellulose products P are easily removed from the forming mould 3, as indicated with the dashed arrow in figure 1c.

For all embodiments, the forming mould may be arranged with stiff mould parts or alternatively with one or more deformation elements arranged in the mould parts. With stiff mould parts is meant that the mould parts are made of a stiff material with limited deformation capabilities, such as for example steel or aluminium. A deformation element is made of a material that is allowed to deform when forming the cellulose products P in the forming mould 3.

If the forming mould 3 comprises a deformation element, the deformation element is made of a material that can be deformed when a force or pressure is applied, and the deformation element is suitably made of an elastic material capable of recovering size and shape after deformation. If the deformation element is made of such a material, an even pressure distribution can be achieved in the forming process, where the pressure exerted onto the cellulose blank structure 2 from the deformation element is equal or essentially equal in all directions. When the deformation element under pressure is in a fluid-like state, a uniform fluid-like pressure distribution is achieved. The forming pressure P_{F} is with such a material thus applied to the cellulose blank structure 2 from all directions, and the deformation element may exert an isostatic forming pressure on the cellulose blank structure during the dry-forming of the cellulose products.

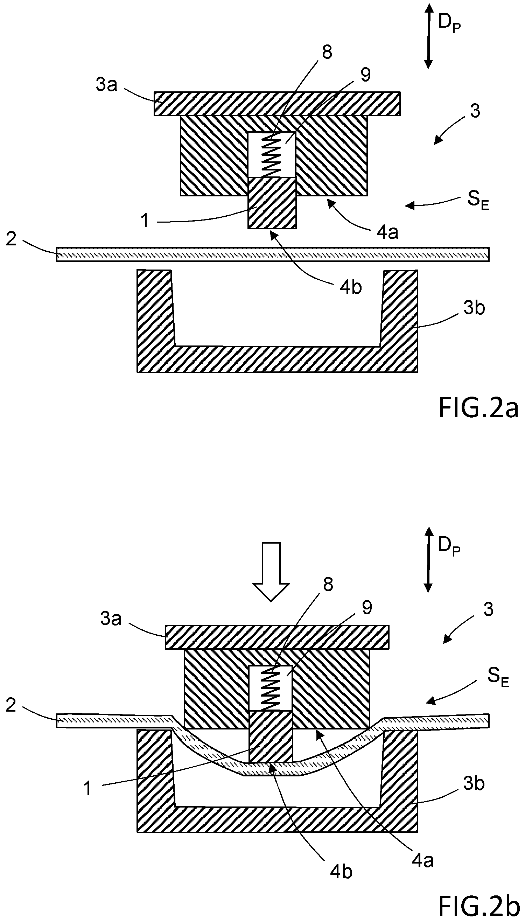

An embodiment of the movable element 1 will be described more in detail in connection to figures 2a-g. In this embodiment, the movable element 1 is movably integrated in the first mould part 3a.

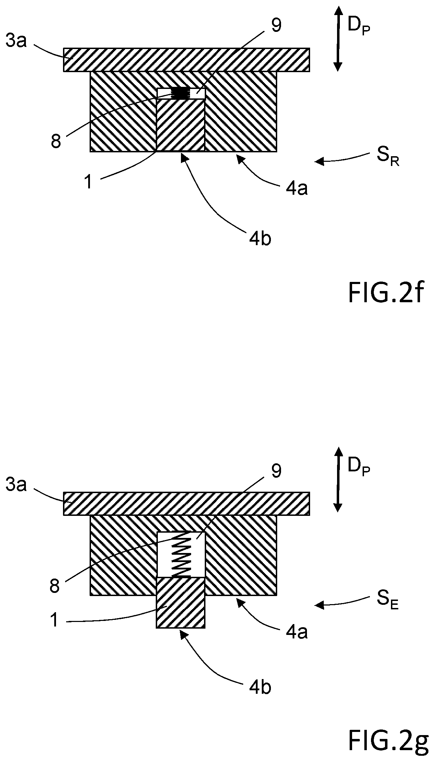

As described above, the movable element 1 is arranged for inserting the cellulose blank structure 2 into the second mould part 3b before forming of the cellulose products P, and ejecting the cellulose products P from the forming mould 3 after forming of the cellulose products P in the forming mould 3. The movable element 1 is arranged as a displaceable structural part of the first mould part 3a. The movable element 1 is displaceable between an extended state S_{E}, as shown in for example figure 2g, and a retracted state S_{R}, as shown in for example figure 2f.

The movable element 1 is in the extended state S_{E} arranged as a protruding body extending in the pressing direction D_{P} of the forming mould 3 relative to a surrounding pressing surface 4a of the first mould part 3a. In this way, the movable element 1 has a protruding configuration with an extension in the pressing direction D_{P} in the extended state S_{E}, as understood from figure 2g. The movable element 1 is more specifically in the extended state S_{E} configured for inserting the cellulose blank structure 2 into the second mould part 3b before forming the cellulose products, and ejecting the cellulose products P from the forming mould 3 after forming of the cellulose products P.

The movable element 1 is in the retracted state S_{R} arranged as a pressing surface 4b, where the pressing surface 4a is cooperating with the surrounding pressing surface 4a for forming the cellulose products P. The pressing surface 4b may for example be arranged as a lower surface of the movable element 1, as shown in the illustrated embodiment. In the retracted state S_{R} the pressing surface 4b is suitably arranged flush with the surrounding pressing surface 4a, or essentially flush with the surrounding pressing surface 4a, as illustrated in figure 2f, for an efficient product forming operation in the forming mould 3 with a smooth forming surface.

The movable element 1 is suitably arranged in a cavity 9. In the extended state S_{E}, the movable element 1 is extending out from the cavity 9 in the pressing direction D_{P}, as shown in for example figure 2g, and in the retracted state S_{R} the movable element 1 is displaced further into the cavity 9 compared to the extended state S_{E}, as shown in for example figure 2f. The arrangement of the movable element 1 in the cavity 9 is securing that the movable element 1 in the retracted state S_{R} is not negatively impacting the forming of the cellulose products P. The movable element 1 is during the forming operation suitably arranged within its cavity 9 without exerting too high pressure onto the cellulose blank structure 2.

The first mould part 3a further comprises an actuator 8 connected to the movable element 1, and the actuator 8 is configured for displacing the movable element 1. The actuator 8 may have any suitable configuration.

In the illustrated embodiment shown in figures 2a-g, the actuator 8 is arranged as a spring. The spring is configured for displacing the movable element 1 from the retracted state S_{R} to the extended state S_{E}, as will be further described below. Any suitable type of spring may be used, such as for example a compression spring. The actuator 8 is in this embodiment thus enabling a movement of the movable element 1 from the retracted state S_{R} to the extended state S_{E}, and as understood from the figures the actuator 8 is displacing the movable element 1 relative to the cavity 9.

The cellulose blank structure 2 is provided from a suitable source and transported to the forming mould 3 in a feeding direction D_{F}, as indicated in figure 2a. The cellulose blank structure 2 is suitably fed intermittently to the forming mould 3. In order to form the cellulose products P, the cellulose blank structure 2 is arranged between the first mould part 3a and the second mould part 3b, as shown in figure 2a. In this initial position of the forming operation, the movable element 1 is arranged in the extended state S_{E}, through action from the actuator 8. The spring forming the actuator 8 is through spring action pushing the movable element out from the cavity 9 into the position as protruding body in the extended state S_{E}, and the movable element 1 is arranged in the extended state S_{E} in a protruding configuration with an extension in the pressing direction D_{P}.

To form the cellulose products P from the cellulose blank structure 2, the first mould part 3a is moved towards the second mould part 3b, as shown in figure 2b, and in the illustrated embodiment, the cellulose blank structure 2 is pushed by the movable element 1 in the extended state S_{E} into the second mould part 3b. Thus, when the movable element 1 is arranged in the extended state S_{E} the cellulose blank structure 2 is inserted into the second mould part 3b with the movable element 1 upon movement of the first mould part 3a towards the second mould part 3b. This is especially suitable when forming deep drawn cellulose products P, where the movable element 1 is efficiently pushing the cellulose blank structure 2 into the second mould part 3b for an efficient following product forming operation.

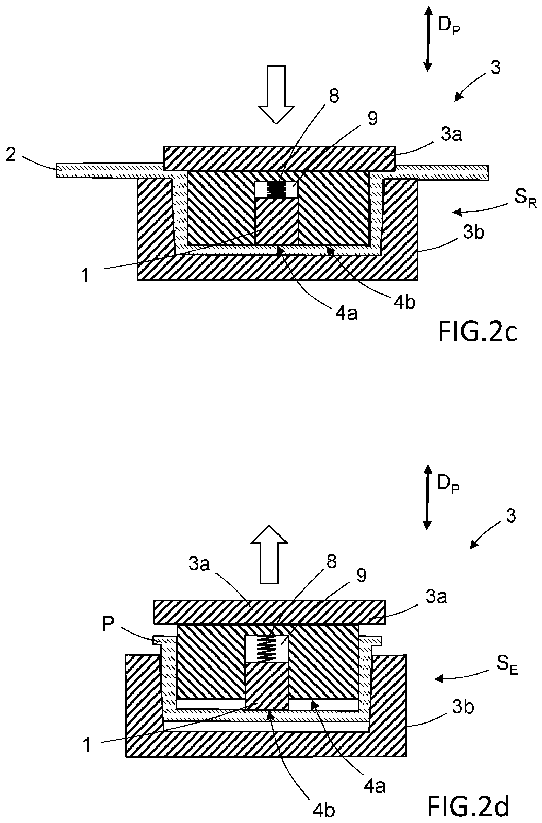

When the first mould part 3a is moved towards the second mould part 3b with the cellulose blank structure 2 positioned between the mould parts, the forming pressure P_{F} is established onto the cellulose blank structure 2 by the pushing force applied by the first mould part 3a. Upon movement of the first mould part 3a towards the second mould part 3b, the movable element 1 is pushed into the cavity 9 from the extended state S_{E} to the retracted state S_{R} by the forces acting between the mould parts, and upon this displacement of the movable element 1 from the extended state S_{E} to the retracted state S_{R} the spring is compressed, as shown in figure 2c. The movable element 1 is simply pushed by the second mould part 3b into the cavity 9, and in this way, the movable element 1 is arranged in the retracted state S_{R} during forming of the cellulose products P in the forming mould 3.

When the forming pressure P_{F} is established in the forming mould 3 onto the cellulose blank structure 2, the movement of the first mould part 3a is stopped in the product forming position F_{POS}, in which the forming pressure P_{F} is exerted onto the cellulose blank structure 2. The forming position F_{POS} is schematically shown in figure 2c, and in the forming position F_{POS} the movable element 1 is positioned in the retracted state S_{R}, where the pressing surface 4b suitably is arranged flush with the surrounding pressing surface 4a.

The interaction between the first mould part 3a with the movable element 1 and the second mould part 3b is thus establishing the forming pressure P_{F} in the forming mould 3. The applied force is during the forming process establishing the forming pressure P_{F} onto the cellulose blank structure 2, which together with the forming temperature T_{F} applied onto the cellulose blank structure 2 is dry-forming the cellulose products P. The cellulose products P are through this operation efficiently formed from the cellulose blank structure 2 by applying the forming temperature T_{F} onto the cellulose blank structure 2 and applying the forming pressure P_{F} onto the cellulose blank structure 2 between the first mould part 3a and the second mould part 3b. In the forming position F_{POS} the movable element 1 is arranged in the retracted state S_{R}, in which the movable element is pushed into the cavity 9, as shown in figure 2c.

Suitably, the forming pressure P_{F} is applied onto the air-formed cellulose blank structure 2 during a single pressing operation O_{SP} upon forming of the cellulose products P in the forming mould 3, where the cellulose product P is formed from the cellulose blank structure 2 in one single pressing step in the forming mould 3.

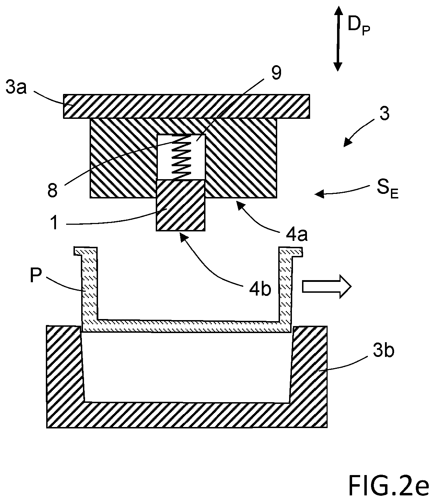

After dry-forming the cellulose products P in the forming position F_{POS}, as shown in figure 2c, the first mould part 3a is moved in a direction away from the second mould part 3b, as indicated with the arrow in figure 2d. During this movement of the first mould part 3a, the movable element 1 is displaced from the retracted state S_{R} towards the extended state S_{E} through action from the spring constituting the actuator 8. The spring is during the movement of the first mould part 3 allowed to push the movable element 1 out from the cavity 9. The displacement of the movable element 1 is ejecting the cellulose products P from the forming mould 3 after forming of the cellulose products P, and the movable element 1 is in this way pushing the formed cellulose products P away from the first mould part 3a, as shown in figure 2d. In figure 2e, the movable element 1 has been displaced by the spring to the extended state S_{E}, and the formed cellulose product P has been fully separated from the first mould part 3a by the movable element 1. This separation is enabling an easy removal of the cellulose products P from the forming mould 3, as indicated with the arrow in figure 2e. Thus, the displacement of the movable element 1 from the retracted state S_{R} to the extended state S_{E} is enabling the ejection of the formed cellulose products P from the forming mould 3, and the cellulose products P are efficiently ejected upon the movement of the movable element 1 from the retracted state S_{R} to the extended state S_{E}.

In other embodiments, the actuator 8 is instead arranged as an electric actuator, a hydraulic actuator, or a pneumatic actuator, where the actuator 8 is configured for displacing the movable element 1 from the retracted state S_{R} to the extended state S_{E}, or displacing the movable element 1 between the extended state S_{E} and the retracted state S_{R}. A control unit may be used for controlling the movement of the movable element 1 by the actuator 8 from the retracted state S_{R} to the extended state S_{E}, or between the extended state S_{E} and the retracted state S_{R}.

In other embodiments, the first mould part 3a and/or the second mould part 3b comprises a cutting edge configured for cutting out the formed cellulose products P from the cellulose blank structure 2 upon forming of the cellulose products in the forming mould 3. In this way, the formed cellulose products P are separated from residual parts of the cellulose blank structure 2 through a cutting action.

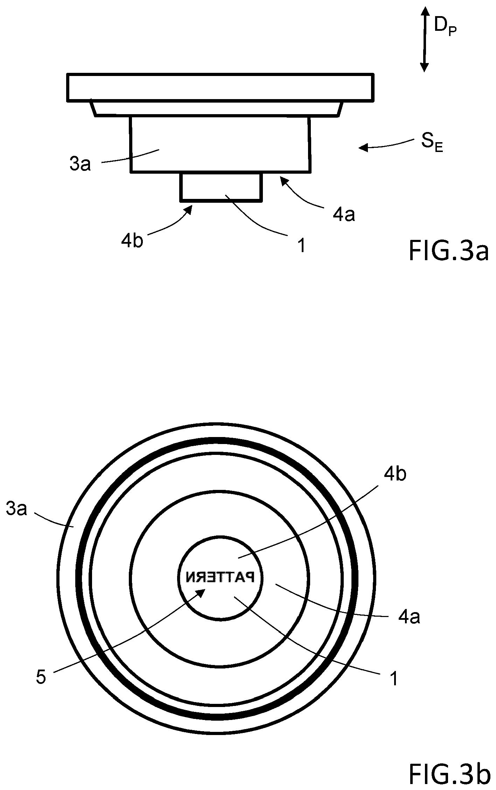

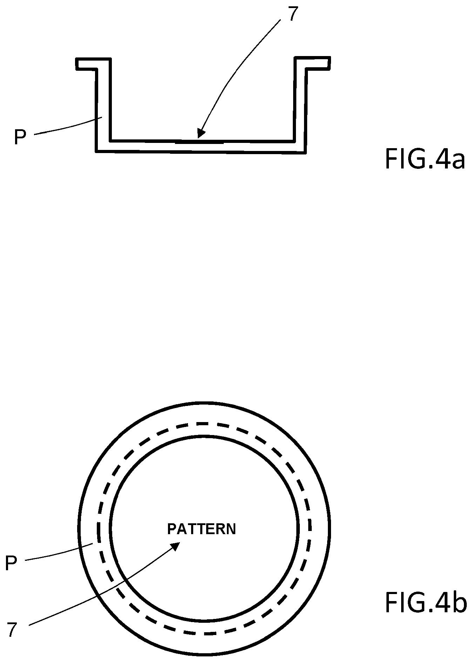

In another embodiment, as illustrated in figures 3a-b, the movable element 1 comprises an embossing pattern 5 configured for forming a structural pattern 7 in the cellulose products P upon forming in the forming mould 3. In this embodiment, the first mould part 3a comprises the movable element 1. The structural pattern 7 is arranged inside the cellulose product P as schematically illustrated in figures 4a-b. The embossing pattern 5 is compressing the cellulose fibres in the cellulose blank structure 2 upon forming in the forming mould 3, and the compression of the cellulose fibres are forming the structural pattern 7. The embossing pattern 5 is suitably configured as a barcode, a QR code, or other identification code, or alternatively as a logotype. The movable element 1 may have any suitable configuration.

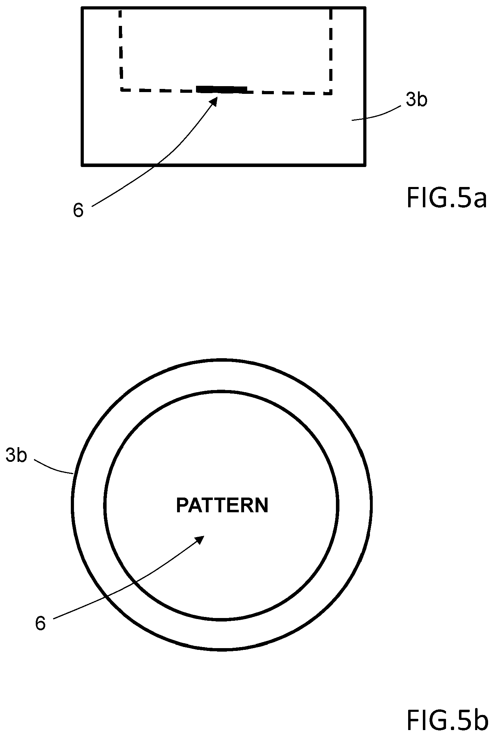

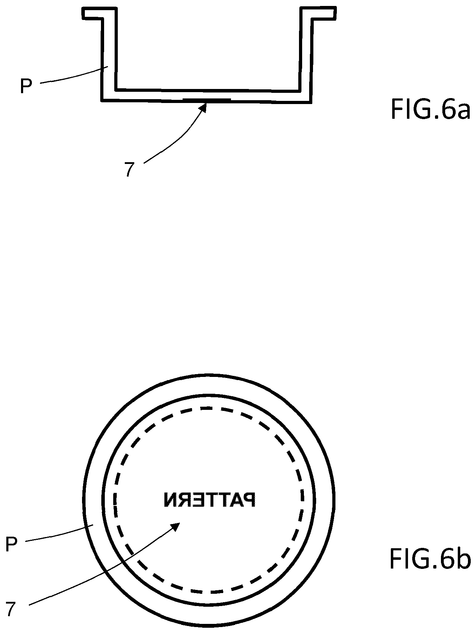

In another embodiment, as illustrated in figures 5a-b, the second mould part 3b comprises a mould embossing pattern 6. The mould embossing pattern 6 is configured for forming the structural pattern 7 in the cellulose products P upon forming in the forming mould 3. The structural pattern 7 is arranged on the outside of the cellulose product P as schematically illustrated in figures 6a-b. The mould embossing pattern 6 is compressing the cellulose fibres in the cellulose blank structure 2 upon forming in the forming mould 3, and the compression of the cellulose fibres are forming the structural pattern 7. The mould embossing pattern 6 is suitably configured as a barcode, a QR code, or other identification code, or alternatively as a logotype. In other embodiments, the embossing pattern 5 and the mould embossing pattern 6 may be arranged in the same forming mould 3 for forming the structural pattern 7 on different sides of the cellulose product P. It should be understood that in other non-illustrated embodiments one or more mould embossing patterns 6 may be arranged on the first mould part 3a and/or the second mould part 3b.

For all embodiments, the forming mould 3 suitably comprises a heating unit that is establishing the forming temperature T_{F} in the cellulose blank structure 2. The heating unit may have any suitable configuration, and as an example, a heated mould part or heated mould parts may be used for establishing the forming temperature T_{f}. The heating unit may be integrated in or cast into the first mould part 3a and/or the second mould part 3b, and suitable heating devices are e.g. electrical heaters, such as a resistor element, or fluid heaters. Other suitable heat sources may also be used.

For all embodiments, the cellulose blank structure 2 may be arranged into the forming mould 3 in any suitable way, and as an example, the cellulose blank structure 2 may be fed with a suitable feeding device, which is transporting the cellulose blank structure 2 to the forming mould 3 in the feeding direction D_{F}. The feeding device could for example be a conveyor belt, a forming wire unit, an industrial robot, or any other suitable manufacturing equipment. The transportation speed may differ depending on the types of cellulose products P produced, and is chosen to match the forming speed in the forming mould 3.

Figures 4a-b and 6a-b schematically show three-dimensional cellulose products P formed from a compressed air-formed cellulose blank structure 2. The cellulose blank structure 2 comprises loose and separated cellulose fibres that are compressed upon forming of the cellulose product P. In the illustrated embodiments, the cellulose products P comprise a structural pattern 7 configured as a barcode, a QR code, or other identification code. As described above, with the expression loose and separated cellulose fibres is meant cellulose fibres that are separated from each other and loosely arranged relative to each other within the cellulose blank structure 2, or cellulose fibres or cellulose fibre bundles that are separated from each other and loosely arranged relative to each other within the cellulose blank structure 2.

As understood from figures 3a-b and 4a-b, the structural pattern 7 is provided on an inside of the cellulose products P and is a result of the embossing pattern 5 in the movable element 4 pressing against and forming the loose and separated fibres of the cellulose blank structure 2 into a rigid structure simultaneously with the forming of the cellulose products P.

As understood from figures 5a-b and 6a-b, the structural pattern 7 is provided on an outside of the cellulose products P and is a result of the mould embossing pattern 6 in the second mould part 3b pressing against and forming the loose and separated fibres of the cellulose blank structure 2 into a rigid structure simultaneously with the forming of the cellulose products P.

Hence, the structural pattern 7 can be arranged on the inside of the cellulose products P or on the outside of the cellulose products P. However, according to one example embodiment, both the movable element 1 and the opposite mould part may be provided with embossing pattern 5 and mould embossing pattern 6 giving a structural pattern on both the inside and the outside of the cellulose products P. The two structural patterns 7 can be either two different patterns or one pattern seen from either the inside or the outside of the cellulose products P. Two different patterns can for example be advantageously used to identify two different use modes of the final product. The first use mode could for example be used to identify product specific information from the outside before use, and the second use mode could for example be used to give product specific information after use. The product specific information in the first mode could, for example, give information on what the cellulose products contains, such as a table of contents. The product specific information in the second mode could for example give information on how the cellulose products should be recycled. The structural pattern or patterns are advantageously formed such that a non-illustrated reading unit can identify the pattern and provide adequate information from for example a database to a user of the cellulose product P, or alternatively to a sorting unit or the like. The reading unit may for example be a cellular phone with a suitable sensor equipment, a handheld reader with a suitable sensor equipment, or an automized machine with a suitable sensor equipment. The suitable sensor equipment can for example be a camera connected to an image decoding device and/or a therefor adapted software for signal processing. The suitable sensor equipment can for example be a light unit connected to a frequency decoding device and/or a therefor adapted software for signal processing.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made without departing from the scope of the present disclosure as defined in the claims. Furthermore, modifications may be made to adapt a particular situation or material to the teachings of the present disclosure.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description, provided that they fall within the scope of protection of the appended claims. Reference signs mentioned in the claims should not be seen as limiting the extent of the matter protected by the claims, and their sole function is to make claims easier to understand.

### REFERENCE SIGNS

- 1:: Movable element
- 2:: Cellulose blank structure
- 3:: Forming mould
- 3a:: First mould part
- 3b:: Second mould part
- 4a:: Surrounding pressing surface
- 4b:: Pressing surface
- 5:: Embossing pattern
- 6:: Mould embossing pattern
- 7:: Structural pattern
- 8:: Actuator
- 9:: Cavity

- D_{P}:: Pressing direction
- F_{POS}:: Forming position
- O_{SP}:: Single pressing operation
- P:: Cellulose products
- P_{F}:: Forming pressure
- PM:: Pressing module
- S_{E}:: Extended state
- S_{R}:: Retracted state
- T_{F}:: Forming temperature

## Claims

1. A forming mould (3) for forming three-dimensional cellulose products (P) from an air-formed cellulose blank structure (2) comprising at least 95% cellulose fibres, wherein the forming mould (3) comprises a first mould part (3a) and a second mould part (3b), wherein the first mould part (3a) and the second mould part (3b) are movable relative to each other in a pressing direction (D_{P}) and arranged to be pressed relative to each other during forming of the cellulose products (P), wherein the forming mould (3) is configured to exert a forming pressure P_{F} in the range of 1-100 MPa and a forming temperature T_{F} in the range of 100-300°C to the air-formed cellulose blank structure (2) during forming of the cellulose products (P),
wherein the first mould part (3a) comprises a movable element (1) displaceable between an extended state (S_{E}) and a retracted state (S_{R}),
wherein the movable element (1) in the extended state (S_{E}) is arranged as a protruding body extending in the pressing direction (D_{P}) relative to a surrounding pressing surface (4a) of the first mould part (3a), wherein the movable element (1) in the extended state (S_{E}) is configured for inserting the cellulose blank structure (2) into the second mould part (3b) and ejecting the cellulose products (P) from the forming mould (3),
wherein the movable element (1) in the retracted state (S_{R}) is arranged as a pressing surface (4b) cooperating with the surrounding pressing surface (4a) for forming the cellulose products (P).

2. The forming mould (3) according to claim 1,
wherein the movable element (1) is arranged as a displaceable structural part of the first mould part (3a).

3. The forming mould (3) according to claim 1 or 2,
wherein in the extended state (S_{E}) the movable element (1) has a protruding configuration with an extension in the pressing direction (D_{P}).

4. The forming mould (3) according to any preceding claim,
wherein the movable element is (1) arranged in a cavity (9) in the first mould part (3a).

5. The forming mould (3) according to any preceding claim,
wherein in the retracted state (S_{R}) the pressing surface (4b) is arranged flush with the surrounding pressing surface (4a).

6. The forming mould (3) according to any preceding claim, wherein the first mould part (3a) further comprises an actuator (8) connected to the movable element (1), wherein the actuator (8) is configured for displacing the movable element (1), and wherein
the actuator (8) is arranged as a spring configured for displacing the movable element (1) from the retracted state (S_{R}) to the extended state (S_{E}); or
the actuator (8) is arranged as an electric actuator, a hydraulic actuator, or a pneumatic actuator, configured for displacing the movable element (1) between the extended state (S_{E}) and the retracted state (S_{R}).

7. The forming mould (3) according to any preceding claim,
wherein the movable element (1) comprises an embossing pattern (5) and/or wherein the second mould part (3b) comprises a mould embossing pattern (6), wherein the embossing pattern (5) and/or mould embossing pattern (6) are configured for forming a structural pattern (7) in the cellulose products (P) upon forming in the forming mould (3).

8. The forming mould (3) according to claim 7,
wherein the embossing pattern (5) and/or the mould embossing pattern (6) is configured as a logotype, a barcode, a QR code, or other identification code.

9. A method for forming three-dimensional cellulose products (P) from an air-formed cellulose blank structure (2) in a forming mould (3), wherein the forming mould (3) comprises a first mould part (3a) and a second mould part (3b), wherein the first mould part (3a) and the second mould part (3b) are movable relative to each other in a pressing direction (D_{P}) and arranged to be pressed relative to each other during forming of the cellulose products (P), wherein the first mould part (3a) comprises a movable element (1), wherein the movable element (1) displaceable between an extended state (S_{E}) and a retracted state (S_{R}), wherein in the extended state the movable element (1) is arranged as a protruding body extending in the pressing direction (D_{P}) relative to a surrounding pressing surface (4a) of the first mould part (3a), wherein in the retracted state (S_{R}) the movable element (1) is arranged as a pressing surface (4b) cooperating with the surrounding pressing surface (4a), wherein the method comprises the steps:
providing the cellulose blank structure (2) and arranging the cellulose blank structure (2) between the first mould part (3a) and the second mould part (3b), wherein the cellulose blank structure (2) comprises at least 95% cellulose fibres;
arranging the movable element (1) in the extended state (S_{E}) and inserting the cellulose blank structure (2) into the second mould part (3b) with the movable element (1) upon movement of the first mould part (3a) and/or the second mould part (3b);
arranging the movable element (1) in the retracted state (S_{R}) and forming the cellulose product (P) from the cellulose blank structure (2) by applying a forming temperature (T_{F}) in the range of 100-300 °C onto the cellulose blank structure (2), and applying a forming pressure (P_{F}) in the range of 1-100 MPa onto the cellulose blank structure (2) between the first mould part (3a) and the second mould part (3b);
displacing the movable element (1) from the retracted state (S_{R}) to the extended state (S_{E}), wherein the formed cellulose products (P) are ejected from the forming mould (3) upon movement of the movable element (1) from the retracted state (S_{R}) to the extended state (S_{E}).

10. The method according to claim 9,
wherein the method further comprises the step: arranging the movable element (1) in the extended state (S_{E}) in a protruding configuration with an extension in the pressing direction (D_{P}).

11. The method according to claim 9 or 10,
wherein the method further comprises the step: arranging the pressing surface (4b) in the retracted state (S_{R}) flush with the surrounding pressing surface (4a).

12. The method according to any of claims 9 to 11, wherein the first mould part (3a) further comprises an actuator (8) connected to the movable element (1), wherein the method further comprises the step: displacing the movable element (1) with the actuator (8), and wherein
the actuator (8) is arranged as a spring displacing the movable element (1) from the retracted state (S_{R}) to the extended state (S_{E}); or
the actuator (8) is arranged as an electric actuator, a hydraulic actuator, or a pneumatic actuator, displacing the movable element (1) between the extended state (S_{E}) and the retracted state (S_{R}).

13. The method according to any of claims 9 to 12,
wherein the movable element (1) comprises an embossing pattern (5) and/or wherein the second mould part (3b) comprises a mould embossing pattern (6), wherein the method further comprises the step: forming a structural pattern (7) in the cellulose products (P) with the embossing pattern (5) and/or the mould embossing pattern (6) upon forming in the forming mould (3).

14. The method according to claim 13,
wherein the embossing pattern (5) and/or the mould embossing pattern (6) is configured as a logotype, a barcode, a QR code, or other identification code.

## Patentansprüche

1. Form (3) zum Formen dreidimensionaler Celluloseprodukte (P) aus einer luftgeformten Celluloserohlingsstruktur (2), die mindestens 95 % Cellulosefasern umfasst, wobei die Form (3) ein erstes Formteil (3a) und ein zweites Formteil (3b) umfasst, wobei das erste Formteil (3a) und das zweite Formteil (3b) in Pressrichtung (D_{P}) relativ zueinander beweglich und so angeordnet sind, dass sie beim Formen der Celluloseprodukte (P) relativ zueinander gepresst werden, wobei die Form (3) so konfiguriert ist, dass sie während des Formens der Celluloseprodukte (P) einen Formdruck P_{f} im Bereich von 1-100 MPa und eine Formtemperatur T_{f} im Bereich von 100-300°C auf die luftgeformte Celluloserohlingstruktur (2) anwendet,
wobei das erste Formteil (3a) ein bewegliches Element (1) umfasst, das zwischen einem ausgefahrenen Zustand (Sₑ) und einem eingefahrenen Zustand (Sᵣ) beweglich ist,
wobei das bewegliche Element (1) im ausgefahrenen Zustand (Sₑ) als hervorstehender Körper angeordnet ist, der sich in der Pressrichtung (D_{P}) relativ zu einer umgebenden Pressfläche (4a) des ersten Formteils (3a) erstreckt, wobei das bewegliche Element (1) im ausgefahrenen Zustand (Sₑ) zum Einsetzen der Celluloserohlingsstruktur (2) in das zweite Formteil (3b) und zum Ausstoßen der Celluloseprodukte (P) aus der Form (3) konfiguriert ist,
wobei das bewegliche Element (1) im eingefahrenen Zustand (Sᵣ) als Pressfläche (4b) angeordnet ist, die mit der umgebenden Pressfläche (4a) zusammenwirkt, um die Celluloseprodukte (P) zu formen.

2. Form (3) nach Anspruch 1,
wobei das bewegliche Element (1) als verschiebbares Strukturteil des ersten Formteils (3a) angeordnet ist.

3. Form (3) nach Anspruch 1 oder 2,
wobei das bewegliche Element (1) im ausgefahrenen Zustand (Sₑ) eine hervorstehende Konfiguration mit einer Erstreckung in Pressrichtung(Dₚ) aufweist.

4. Form (3) nach einem vorstehenden Anspruch,
wobei das bewegliche Element (1) in einem Hohlraum (9) in dem ersten Formteil (3a) angeordnet ist.

5. Form (3) nach einem vorstehenden Anspruch,
wobei die Pressfläche (4b) im eingefahrenen Zustand (Sᵣ) bündig mit der umgebenden Pressfläche (4a) angeordnet ist.

6. Form (3) nach einem vorstehenden Anspruch, wobei das erste Formteil (3a) ferner einen mit dem beweglichen Element (1) verbundenen Aktuator (8) umfasst, wobei der Aktuator (8) zum Verschieben des beweglichen Elements (1) konfiguriert ist und wobei
der Aktuator (8) als Feder angeordnet ist, die zum Verschieben des beweglichen Elements (1) aus dem eingefahrenen Zustand (Sᵣ) in den ausgefahrenen Zustand (Sₑ) konfiguriert ist; oder
der Aktuator (8) als elektrischer Aktuator, hydraulischer Aktuator oder pneumatischer Aktuator angeordnet ist, der zum Verschieben des beweglichen Elements (1) zwischen dem ausgefahrenen Zustand (Sₑ) und dem eingefahrenen Zustand (Sᵣ) konfiguriert ist.

7. Form (3) nach einem vorstehenden Anspruch,
wobei das bewegliche Element (1) ein Prägemuster (5) umfasst und/oder wobei das zweite Formteil (3b) ein Formprägemuster (6) umfasst, wobei das Prägemuster (5) und/oder das Formprägemuster (6) so konfiguriert sind, dass sie beim Formen in der Form (3) ein Strukturmuster (7) in den Celluloseprodukten (P) bilden.

8. Form (3) nach Anspruch 7,
wobei das Prägemuster (5) und/oder das Formprägemuster (6) als Logotyp, Strichcode, QR-Code oder anderer Identifizierungscode konfiguriert sind.

9. Verfahren zum Formen dreidimensionaler Celluloseprodukte (P) aus einer luftgeformten Celluloserohlingsstruktur (2) in einer Form (3), wobei die Form (3) ein erstes Formteil (3a) und ein zweites Formteil (3b) umfasst, wobei das erste Formteil (3a) und das zweite Formteil (3b) relativ zueinander in einer Pressrichtung (D_{P}) beweglich und angeordnet sind, um während des Formens der Celluloseprodukte (P) relativ zueinander gepresst zu werden, wobei das erste Formteil (3a) ein bewegliches Element (1) umfasst, wobei das bewegliche Element (1) zwischen einem ausgefahrenen Zustand (Sₑ) und einem eingefahrenen Zustand (Sᵣ) verschiebbar ist, wobei das bewegliche Element (1) im ausgefahrenen Zustand als hervorstehender Körper angeordnet ist, der sich in der Pressrichtung (D_{P}) relativ zu einer umgebenden Pressfläche (4a) des ersten Formteils (3a) erstreckt, wobei das bewegliche Element (1) im eingefahrenen Zustand (Sᵣ) als Pressfläche (4b) angeordnet ist, die mit der umgebenden Pressfläche (4a) zusammenwirkt, wobei das Verfahren die Schritte umfasst:
Bereitstellen der Celluloserohlingsstruktur (2) und Anordnen der Celluloserohlingsstruktur (2) zwischen dem ersten Formteil (3a) und dem zweiten Formteil (3b), wobei die Celluloserohlingsstruktur mindestens 95 % Cellulosefasern umfasst;
Anordnen des beweglichen Elements (1) im ausgefahrenen Zustand (Se) und Einsetzen der Celluloserohlingsstruktur (2) in das zweite Formteil (3b) mit dem beweglichen Element (1) bei Bewegung des ersten Formteils (3a) und/oder des zweiten Formteils (3b);
Anordnen des beweglichen Elements (1) im eingefahrenen Zustand (Sr) und Formen des Celluloseprodukts (P) aus der Celluloserohlingsstruktur (2) durch Anwenden einer Formtemperatur (T_{F}) im Bereich von 100 bis 300 °C auf die Celluloserohlingsstruktur (2) und Anwenden eines Formdrucks (Pf) im Bereich von 1 bis 100 MPa auf die Celluloserohlingsstruktur (2) zwischen dem ersten Formteil (3a) und dem zweiten Formteil (3b);
Verschieben des beweglichen Elements (1) aus dem eingefahrenen Zustand (Sᵣ) in den ausgefahrenen Zustand (Sₑ), wobei die geformten Celluloseprodukte (P) bei Bewegung des beweglichen Elements (1) aus dem eingefahrenen Zustand (Sᵣ) in den ausgefahrenen Zustand (Sₑ) aus dem Formteil (3) ausgestoßen werden.

10. Verfahren nach Anspruch 9,
wobei das Verfahren ferner den folgenden Schritt umfasst:
Anordnen des beweglichen Elements (1) im ausgefahrenen Zustand (Sₑ) in einer hervorstehenden Konfiguration mit einer Erstreckung in Pressrichtung (Dₚ).

11. Verfahren nach Anspruch 9 oder 10,
wobei das Verfahren ferner den folgenden Schritt umfasst:
Anordnen der Pressfläche (4b) im eingefahrenen Zustand (Sᵣ) bündig mit der umgebenden Pressfläche (4a).

12. Verfahren nach einem der Ansprüche 9 bis 11, wobei das erste Formteil (3a) ferner einen mit dem beweglichen Element (1) verbundenen Aktuator (8) umfasst, wobei das Verfahren ferner den Schritt umfasst: Verschieben des beweglichen Elements (1) mit dem Aktuator (8), und wobei
der Aktuator (8) als Feder zum Verschieben des beweglichen Elements (1) aus dem eingefahrenen Zustand (Sᵣ) in den ausgefahrenen Zustand (Sₑ) angeordnet ist; oder
der Aktuator (8) als elektrischer Aktuator, hydraulischer Aktuator oder pneumatischer Aktuator zum Verschieben des beweglichen Elements (1) zwischen dem ausgefahrenen Zustand (Sₑ) und dem eingefahrenen Zustand (Sᵣ) angeordnet ist.

13. Verfahren nach einem der Ansprüche 9 bis 12,
wobei das bewegliche Element (1) ein Prägemuster (5) umfasst und/oder wobei das zweite Formteil (3b) ein Formprägemuster (6) umfasst, wobei das Verfahren ferner den Schritt umfasst: Bilden eines Strukturmusters (7) in den Celluloseprodukten (P) mit dem Prägemuster (5) und/oder dem Formprägemuster (6) beim Formen in der Form (3).

14. Verfahren nach Anspruch 13,
wobei das Prägemuster (5) und/oder das Formprägemuster (6) als Logotyp, Strichcode, QR-Code oder anderer Identifizierungscode konfiguriert sind.

## Revendications

1. Moule de formage (3) pour former des produits de cellulose tridimensionnels (P) à partir d'une structure vierge de cellulose formée à l'air (2) comprenant au moins 95 % de fibres de cellulose, dans lequel le moule de formage (3) comprend une première partie de moule (3a) et une deuxième partie de moule (3b), dans lequel la première partie de moule (3a) et la deuxième partie de moule (3b) sont mobiles l'une par rapport à l'autre dans une direction de pression (D_{P}) et agencées pour être pressées l'une par rapport à l'autre lors du formage des produits de cellulose (P), dans lequel le moule de formage (3) est configuré pour exercer une pression de formage P_{F} comprise entre 1 et 100 MPa et une température de formage T_{F} comprise entre 100 et 300 °C sur la structure vierge de cellulose formée à l'air (2) lors du formage des produits de cellulose (P),
dans lequel la première partie de moule (3a) comprend un élément mobile (1) déplaçable entre un état étendu (S_{E}) et un état rétracté (S_{R}),
dans lequel l'élément mobile (1) à l'état étendu (S_{E}) est agencé comme un corps saillant s'étendant dans la direction de pression (D_{P}) par rapport à une surface de pression environnante (4a) de la première partie de moule (3a), dans lequel l'élément mobile (1) à l'état étendu (S_{E}) est configuré pour insérer la structure vierge de cellulose (2) dans la deuxième partie de moule (3b) et éjecter les produits de cellulose (P) du moule de formage (3),
dans lequel l'élément mobile (1) à l'état rétracté (S_{R}) est agencé comme une surface de pression (4b) coopérant avec la surface de pression environnante (4a) pour former les produits de cellulose (P).

2. Moule de formage (3) selon la revendication 1,
dans lequel l'élément mobile (1) est agencé comme une partie structurelle déplaçable de la première partie de moule (3a).

3. Moule de formage (3) selon la revendication 1 ou 2,
dans lequel, à l'état étendu (S_{E}), l'élément mobile (1) a une configuration saillante avec une extension dans la direction de pression (D_{P}).

4. Moule de formage (3) selon l'une quelconque des revendications précédentes,
dans lequel l'élément mobile (1) est agencé dans une cavité (9) de la première partie de moule (3a).

5. Moule de formage (3) selon l'une quelconque des revendications précédentes,
dans lequel, à l'état rétracté (S_{R}), la surface de pression (4b) est agencée au ras de la surface de pression environnante (4a).

6. Moule de formage (3) selon l'une quelconque des revendications précédentes, dans lequel la première partie de moule (3a) comprend en outre un actionneur (8) relié à l'élément mobile (1), dans lequel l'actionneur (8) est configuré pour déplacer l'élément mobile (1), et dans lequel
l'actionneur (8) est agencé comme un ressort configuré pour déplacer l'élément mobile (1) de l'état rétracté (S_{R}) à l'état étendu (S_{E}) ; ou
l'actionneur (8) est agencé comme un actionneur électrique, un actionneur hydraulique ou un actionneur pneumatique, configuré pour déplacer l'élément mobile (1) entre l'état étendu (S_{E}) et l'état rétracté (S_{R}).

7. Moule de formage (3) selon l'une quelconque des revendications précédentes,
dans lequel l'élément mobile (1) comprend un motif de gaufrage (5) et/ou dans lequel la deuxième partie de moule (3b) comprend un motif de gaufrage de moule (6), dans lequel le motif de gaufrage (5) et/ou le motif de gaufrage de moule (6) sont configurés pour former un motif structurel (7) dans les produits de cellulose (P) lors de leur formage dans le moule de formage (3).

8. Moule de formage (3) selon la revendication 7,
dans lequel le motif de gaufrage (5) et/ou le motif de gaufrage de moule (6) est configuré comme un logotype, un code-barres, un code QR ou un autre code d'identification.

9. Procédé de formage de produits de cellulose tridimensionnels (P) à partir d'une structure vierge de cellulose formée à l'air (2) dans un moule de formage (3), dans lequel le moule de formage (3) comprend une première partie de moule (3a) et une deuxième partie de moule (3b), dans lequel la première partie de moule (3a) et la deuxième partie de moule (3b) sont mobiles l'une par rapport à l'autre dans une direction de pression (D_{P}) et agencées pour être pressées l'une par rapport à l'autre lors du formage des produits de cellulose (P), dans lequel la première partie de moule (3a) comprend un élément mobile (1) pouvant se déplacer entre un état étendu (S_{E}) et un état rétracté (S_{R}), dans lequel à l'état étendu, l'élément mobile (1) est agencé comme une saillie s'étendant dans la direction de pression (D_{P}) par rapport à la surface de pression environnante (4a) de la première partie (3a), dans lequel, à l'état rétracté (S_{R}), l'élément mobile (1) est agencé comme une surface de pression (4b) coopérant avec la surface de pression environnante (4a), le procédé comprend les étapes consistant à :
fournir la structure vierge de cellulose (2) et agencer la structure vierge de cellulose (2) entre la première partie de moule (3a) et la deuxième partie de moule (3b), dans lequel la structure vierge de cellulose (2) comprend au moins 95 % de fibres de cellulose ;
agencer l'élément mobile (1) dans l'état étendu (S_{E}) et insérer la structure vierge de cellulose (2) dans la deuxième partie de moule (3b) avec l'élément mobile (1) lors du déplacement de la première partie du moule (3a) et/ou de la deuxième partie du moule (3b ) ;
agencer l'élément mobile (1) à l'état rétracté (S_{R}) et former le produit cellulosique (P) à partir de la structure vierge de cellulose (2) en appliquant une température de formage (T_{F}) dans la plage de 100 à 300 °C sur la structure vierge de cellulose (2), et en appliquant une pression de formage (P_{F}) dans la plage de 1 à 100 MPa sur la structure vierge de cellulose (2) entre la première partie de moule (3a) et la deuxième partie de moule (3b) ;
déplacer l'élément mobile (1) de l'état rétracté (S_{R}) à l'état étendu (S_{E}), dans lequel les produits de cellulose (P) formés sont éjectés du moule de formage (3) lors du déplacement de l'élément mobile (1) de l'état rétracté (S_{R}) à l'état étendu (S_{E}).

10. Procédé selon la revendication 9,
dans lequel le procédé comprend en outre l'étape consistant à :
agencer l'élément mobile (1) à l'état étendu (S_{E}) dans une configuration saillante avec une extension dans la direction de pression (D_{P}).

11. Procédé selon la revendication 9 ou 10,
dans lequel le procédé comprend en outre l'étape consistant à :
agencer la surface de pression (4b) à l'état rétracté (S_{R}) au ras de la surface de pression environnante (4a).

12. Procédé selon l'une quelconque des revendications 9 à 11, dans lequel la première partie de moule (3a) comprend en outre un actionneur (8) relié à l'élément mobile (1), le procédé comprenant en outre l'étape consistant à : déplacer l'élément mobile (1) à l'aide de l'actionneur (8), et dans lequel
l'actionneur (8) est agencé comme un ressort déplaçant l'élément mobile (1) de l'état rétracté (S_{R}) à l'état étendu (S_{E}) ; ou
l'actionneur (8) est agencé comme un actionneur électrique, un actionneur hydraulique ou un actionneur pneumatique, déplaçant l'élément mobile (1) entre l'état étendu (S_{E}) et l'état rétracté (S_{R}).

13. Procédé selon l'une quelconque des revendications 9 à 12, dans lequel l'élément mobile (1) comprend un motif de gaufrage (5) et/ou dans lequel la deuxième partie de moule (3b) comprend un motif de gaufrage de moule (6), dans lequel le procédé comprend en outre l'étape consistant à : former un motif structurel (7) dans les produits de cellulose (P) avec le motif de gaufrage (5) et/ou le motif de gaufrage de moule (6) lors du formage dans le moule de formage (3).

14. Procédé selon la revendication 13,
dans lequel le motif de gaufrage (5) et/ou le motif de gaufrage de moule (6) est configuré comme un logotype, un code-barres, un code QR ou un autre code d'identification.
